Europäisches Patentamt

European Patent Office

Office européen des brevets

(11) Veröffentlichungsnummer: **0 103 856**
**B1**

(12) **EUROPÄISCHE PATENTSCHRIFT**

(45) Veröffentlichungstag der Patentschrift:
11.06.86

(51) Int. Cl.⁴: **G 01 B 7/02, G 01 B 3/22**

(21) Anmeldenummer: 83109123.6

(22) Anmeldetag: 15.09.83

(54) Dynamischer Tastkopf.

(30) Priorität: 21.09.82 DE 3234851

(43) Veröffentlichungstag der Anmeldung:
28.03.84 Patentblatt 84/13

(45) Bekanntmachung des Hinweises auf die Patenterteilung:
11.06.86 Patentblatt 86/24

(84) Benannte Vertragsstaaten:
AT CH DE GB IT LI SE

(56) Entgegenhaltungen:
DD - A - 148 098
DE - A - 2 841 548
DE - A - 3 125 737
DE - B - 2 712 181
DE - B - 2 801 656
GB - A - 1 447 613
GB - A - 2 062 234

(73) Patentinhaber: Mauser-Werke Oberndorf GmbH,
Teckstrasse 11, D-7238 Oberndorf (DE)

(72) Erfinder: Linder, Kurt, Karlsruher Strasse 39,
D-7500 Karlsruhe 1 (DE)

(74) Vertreter: Hofmann, Gerhard, Dipl.-Ing. et al,
Stephanstrasse 49, D-8500 Nürnberg (DE)

LIBER, STOCKHOLM 1986

## Beschreibung

Die Erfindung betrifft einen schaltenden Tastkopf für Meßmaschinen und für den Einsatz in Bearbeitungsmaschinen für Meßaufgaben, der im wesentlichen aus einem in den drei Koordinatenrichtungen X, Y und Z auslenkbaren, zentral in der Z-Achse eingesetzten Taster besteht.

Aus den deutschen Patentschriften DE-PS-23 47 833, 23 65 984 und 27 42 817 sind schaltende Taster mit einer Dreipunktauflage bekannt. Diese Dreipunktlager gestatten zwar ein Auslenken des Meßtasters durch Kippen der Auflageplatte über eine quer liegende Achse, jedoch ist die Kippachse eben wegen des Dreipunktlagers nicht definiert. Gerade bei dem Einsatz von Tastköpfen in Meß- und Bearbeitungsmaschinen ist aber eine exakt definierte Kippachse erforderlich.

Es ist deshalb Aufgabe der Erfindung, einen schaltenden Tastkopf mit zentralem Taster der eingangs genannten Art zu schaffen, der sowohl eine definierte Kippachse in den Koordinatenrichtungen X und Y als auch definierte Auslenkkräfte sowie eine gute Reproduzierbarkeit des gesamten Tasters aufweist.

Erfindungsgemäß wird diese Aufgabe dadurch gelöst, daß der Tastkopf ein Paket von fünf parallel übereinanderliegenden Platten, Scheiben oder dergleichen mit dem zu ihren Oberflächen zentral angeordneten Taster aufweist, der für die Auslenkung in den Koordinatenrichtungen X und Y um Kippachsen der Platten kippbar ist, wobei jede der Kippachsen vom zentralen Taster gleich weit entfernt und auf einer gemeinsamen Querschnittsebene senkrecht zum Taster angeordnet ist, und daß wahlweise die zweite oder die dritte oder die vierte Platte sowohl mit der jeweils darüberliegenden Platte als auch mit der jeweils darunterliegenden Platte durch parallel zu den Koordinatenachsen X und Y an den Seitenkanten der Platten angeordnete Gelenke derart verbunden ist, daß der Kraftfluß bei Auslenkung des Tasters in die Koordinatenrichtungen X und Y von der ersten Platte über das Gelenk auf die zweite Platte, von der zweiten Platte über das um 180° gegenüberliegende Gelenk auf die dritte Platte, von der dritten Platte über das zur zweiten Platte um 90° versetzte Gelenk auf die vierte Platte und von der vierten Platte über das um 180° gegenüberliegende Gelenk auf die fünfte Platte verläuft, während die Auslenkung in der Koordinatenrichtung Z jeweils gegen die Wirkung einer Feder geradlinig in der Längsachse des Tasters erfolgt.

Die Gelenke können durch an zwei übereinanderliegende Platten befestigte Blattfedern gebildet sein. Sie können ferner durch jeweils in zwei übereinanderliegende Platten angeordnete, korrespondierende Ausnehmungen gebildet sein, die parallel zu den Koordinatenrichtungen X und Y verlaufen und Kugeln oder Rollen als Kippelemente aufnehmen.

Zur Erzeugung einer definierten Auslenkkraft in den Koordinatenrichtungen X und Y können in weiterer Ausgestaltung der Erfindung die übereinanderliegenden Platten durch vier an den Platteneckpunkten angeordnete und auf Zug beanspruchte Federn in Ruhelage gehalten sein. Die besondere Anordnung der Platten und ihre Gelenkverbindungen zueinander ermöglichen ferner, daß der Taster in der Koordinatenrichtung Z sowohl gegen die Kraft der eingesetzten Federn bewegbar ist als auch zusammen mit dem Paket der übereinanderliegenden Platten nach oben geradlinig abhebbar ist.

Dieser erfindungsgemäße Tastkopf mit zentralem, horizontal oder vertikal einsetzbarem Taster ist mit einfachen technischen Mitteln aufbaubar und benötigt nur sehr wenig Raum. Die fünf Platten für die definierte Auslenkung des Tasters in den Koordinatenrichtungen X und Y liegen mit ihren Flächen direkt und parallel aufeinander und erlauben über an den Seitenkanten angebrachte dünne Blattfedern ein Kippen des Tasters. Dadurch, daß die Kippachsen immer die gleiche Entfernung zum zentral eingesetzten Taster besitzen, sind die Hebelarme und damit auch die Auslenkkräfte immer gleich. Die gleichen Tasterauslenkkräfte und der gleiche Kippaufbau gewährleisten schließlich eine gute Reproduzierbarkeit der Antastvorgänge und der Meßergebnisse.

In der Zeichnung ist ein Beispiel der Erfindung dargestellt. Es zeigen:

Fig. 1 den Tastkopf in schematischer Perspektive

Fig. 2 die schematische Darstellung von zwei Kippachsen

Fig. 3 den Tastkopf in der Draufsicht

Fig. 4 den Tastkopf im Schnitt gemäß der Linie IV-IV in Fig. 3

Fig. 5 den Tastkopf im Schnitt gemäß der Linie V-V in Fig. 3.

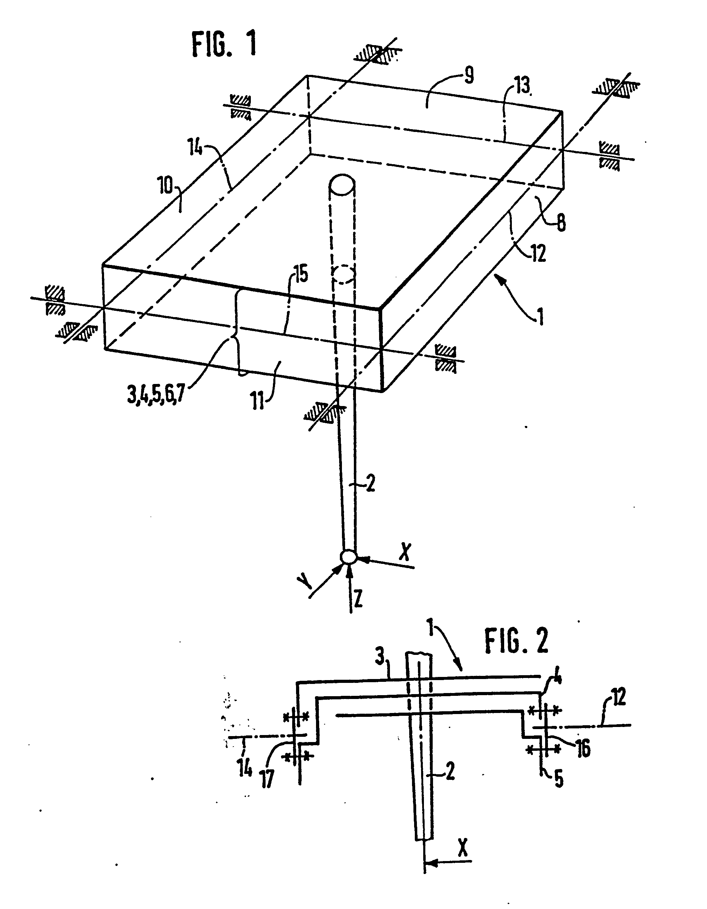

Der erfindungsgemäße Tastkopf ist in den Figuren 1 und 2 schematisch dargestellt und wird im nachfolgenden von seinem Funktionssystem her beschrieben.

Der Tastkopf 1 weist einen zentral angeordneten Taster 2 auf. Der Aufbau ist nun so vorgenommen, daß ein Paket von übereinanderliegenden Platten 3, 4, 5, 6, 7 Gelenke an allen vier Kanten 8, 9, 10, 11 der Platten 3, 4, 5, 6, 7 besitzt, deren Achsen 12, 13, 14, 15 alle in einer gleichen Ebene liegen. Dies bedeutet, daß bei Auslenkung des Tasters 2 in eine der Koordinatenrichtungen X, Y das Plattenpaket des Tastkopfes 1 um eine der Kippachsen 12, 13, 14, 15 kippt. Wird gemäß Fig. 2 der Taster 2 in X-Richtung ausgelenkt, dann kippt das Plattenpaket um das Gelenk 16 in der Kippachse 12. Dabei schwenken die miteinander im Gelenk 17 verbundenen Platten 3 und 4 hoch. Die Platte 5 verbleibt in ihrer dargestellten Ruhelage. Wird der Taster 2 entgegen der Richtung X ausgelenkt, so kippt das System im Gelenk 17 um die Kippachse 14, wobei gleichzeitig die obere Platte 3 hochschwenkt. Die Platten 4 und 5 verbleiben dagegen in der gezeichneten Ruhelage. Die Auslenkung in Y-Richtungen erfolgt gemäß der oben für die X-Richtungen beschriebenen Art. Wesentlich ist, daß die Kippachsen 12, 13, 14 und 15 immer in der gleichen Ebene liegen und der Hebelarm von dem Taater 2 zu den Kippachsen 12, 13, 14 und 15 immer gleich lang ist. Dadurch lassen sich zwangsläufig gleichgroße Auslenkkräfte und eine gute Reproduzierbarkeit erreichen. Der Wechsel des Kippens der Platten 3 und 4 von der X-Koordinate in die Y-Koordinate der Platten 6 und 7 wird durch die Platte 5 ermöglicht, die als einzige zwei Gelenke aufweist, die um 90° zueinander versetzt sind. Dadurch kann das System an dieser Nahtstelle sowohl um die X-Achse als auch um die Y-Achse kippen.

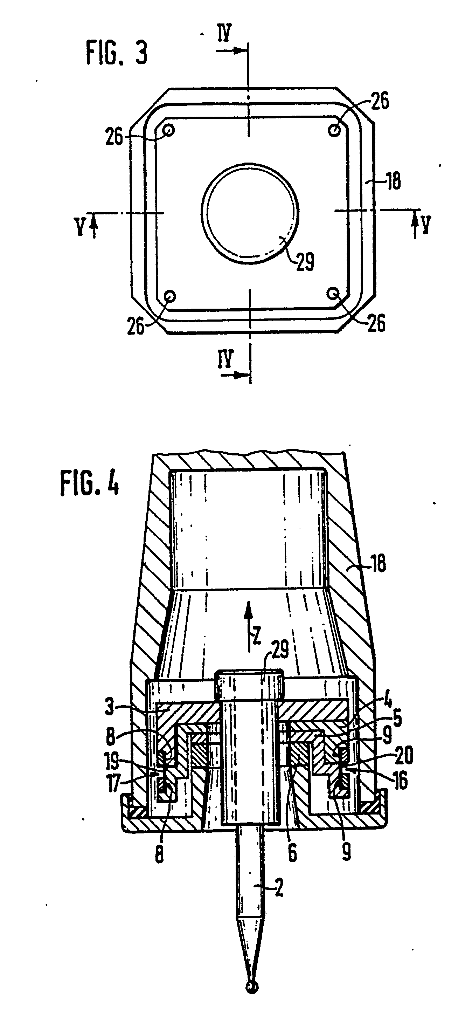

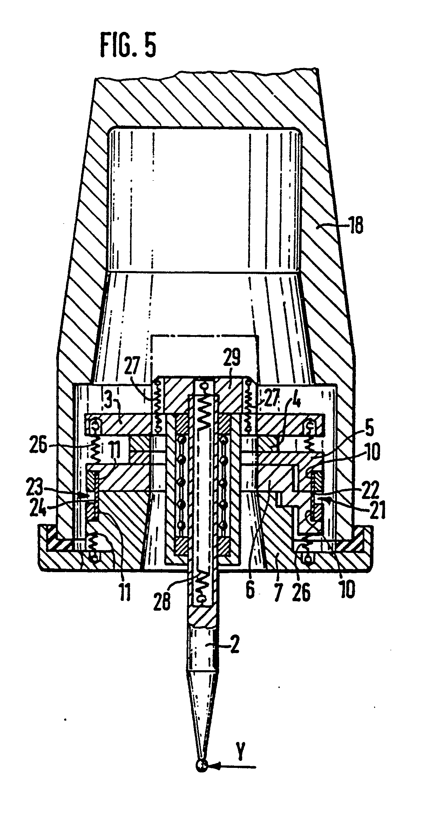

Die Figuren 3, 4 und 5 zeigen ein konkretes Ausführungsbeispiel eines erfindungsgemäßen Tastkopfes. Die Draufsicht nach Fig. 3 dient im wesentlichen dem Verständnis der Schnittdarstellungen nach den Figuren 4 und 5.

In das Gehäuse 18 eines Tastkopfes sind fünf direkt übereinanderliegende Platten 3, 4, 5, 6, 7 eingesetzt, die alle an einer Seitenkante abgewinkelt sind. Die Platte 3 liegt auf der Platte 4 und ist mit dieser durch das Gelenk 17 verbunden.

Das Gelenk 17 wird durch eine über die ganzen Seitenkanten 8 der Platten 3 und 4 befestigte Blattfeder 19 gebildet. Die Platte 4 liegt ihrerseits auf der Platte 5 und ist an diese durch das Gelenk 16 mit der Blattfeder 20 an den Seitenkanten 9 angeschlossen.

Die Platte 5 hat nun eine um 90° versetzte, weitere Verbindung durch das Gelenk 21 mit der Blattfeder 22 an den Seitenkanten 10 der Platten 5 und 6. Auf der gegenüberliegenden Seite befindet sich das Gelenk 23 mit der Blattfeder 24 an den Seitenkanten 11 der Platten 6 und 7. Der Taster 2 befindet sich in zentraler Anordnung und in Verbindung mit den Platten 3, 4, 5, 6 und 7, so daß ein Auslenken des Teaters in der Koordinate X oder Y zugleich immer auch ein Kippen über die Gelenke an den Platten zur Folge hat.

Die aus Blattfedern gebildeten Gelenke befinden sich zudem alle in einer gleichen Ebene.

Der Kraftfluß bei Auslenkung des Tasters 2 geht nun aus von der Platte 3 über das Gelenk 17 auf die Platte 4. Er verläuft weiter über das Gelenk 16 zur Platte 5. Soweit ist der Kraftfluß in Fig. 4 ersichtlich. Der weitere Verlauf dagegen ist aus Fig. 5 erkennbar, weil der Kraftfluß in der Platte 5 um 90° versetzt zum Gelenk 21 und sodann auf die Platte 6 geht. Er läuft echließlich über des Gelenk 23 zur Platte, 7 aus.

Um eine genaue Definition der Auslenkkräfte zu erzielen, befinden sich an den Eckpunkten der Fletten vier auf Zug belastete Federn 26. Die Rückführung des Tasters 2 geschieht dadurch nicht allein durch die Blattfedern in den Gelenken, sondern definiert durch die Zugfedern 26.

Die Auslenkung des Testers 2 in der koordinatenrichtung Z erfolgt gegen die Kraft der eingesetzten Federn 27 bzw. für die Gegenrichtung durch die Federn 28 im Inneren des Testers 2. Das Auslenken des Testers in Z-Richtung nach oben wird begrenzt durch einen Anschlag im Gehäuse 18, gegen den der Deckel 29 enstößt. Ein weiteres Auslenken in gleicher Z-Koordinate ist durch das Abheben das gesamte Plattenpaketes entgegen der Wirkung der Federn 26 möglich.

**Patentansprüche**

1. Schaltender Tastkopf (1) für Maßmaschinan und den Einsatz in Bearbeitungsmaschinen für Meßaufgaben, bestehend im wesentlichen aus einem zentral in der Z-Achse eingesetzten und in den drei Koordinatenrichtungen X, Y und Z auslenkbaren Taster (2), dadurch gekennzeichnet, daß der Tastkopf (1) ein Paket von fünf parallel übareinanderliegenden Platten, Scheiben oder dergleichen (3, 4, 5, 6, 7) mit dem zu ihren Oberflächen zentral angeordneten Taster (2) aufweist, der für die Auslenkung in den Koordinatenrichtungen X und Y um Kippachsen (12, 13, 14, 15) der Platten (3, 4, 5, 6, 7) kippbar ist, wobei jede der Kippachsen (12, 13, 14, 15) vom zentralen. Taster (2) gleich weit entfernt und auf einer gemeinsamen Querschnittsebens senkrecht zum Taster (2) angeordnet ist, und daß wahlweise die zweite (4) oder die dritte (5) oder die vierte Platte (6) sowohl mit der jeweils darüberliegenden Platte (3, 4, 5) als auch mit der jeweils darunterliegenden Platte (5, 6, 7) durch parallel zu den Korodinatenachsen X und Y an den Seitenkanten (8, 9, 10, 11) der Platten (3, 4, 5, 6, 7) angeordnete Gelenke (16, 17, 21, 23) derart verbunden ist, daß der Kraftfluß bei Auslenkung des Tasters (2) in die Koordinatenrichtungen X und Y von der ersten Platte (3) über das Gelenk (17) auf die zweite Platte (4), von der zweiten Platte (4) über das um 180° gegenüberliegende Gelenk (16) auf die dritte Platte (5), von der dritten Platte (5) über das zur zweiten Platte (4) um 80° versetzte Gelenk (21) auf die vierte Platte (6) und von der vierten Platte (6) über das um 180° gegenüberliegende Gelenk (23) auf die fünfte Platte (7) verläuft, während die Auslenkung in der Koordinatenrichtung Z jeweile gegen die Wirkung einer Feder (27, 28) geradlinig in der Längsachse des Tasters (2) erfolgt.

2. Schaltender Tastkopf nach Anspruch 1, dadurch gekennzeichnet, daß die Gelenke (17, 16, 21, 23,) durch an zwei übereinanderliegende Platten (3,4; 4,5; 9,6; 6,7) befestigte Blattfedern (19, 20, 22, 24) gebildet sind.

3. Schaltender Tastkopf nach Anspruch 1, dadurch gekennzeichnet, daß die Gelenke (17, 16, 21, 23,) durch jeweils in zwei übereinanderliegende Platten (3,4; 4,5; 5,6; 6,7) angeordnete, korrespondierende Ausnehmungen gebildet sind, die parallel zu den Koordinatenrichtungen X und Y verlaufen und Kugeln oder Rollen als Kippelemente aufnehmen.

4. Schaltender Tastkopf nach einem der Ansprüche 1 bis 3,
dadurch gekennzeichnet,
daß zur Erzeugung einer definierten Auslenkkraft in den Koordinatenrichtungen X und Y die übereinanderliegenden Platten durch vier an den Platteneckpunkten angeordnete und auf Zug beanspruchte Federn (26) in Ruhelage gehalten sind.

9. Schaltender Tastkopf nach Anspruch 1,
dadurch gekennzeichnet,
daß der Taster (2) in der Koordinatenrichtung Zauch zusammmen mit dem Paket der übereinanderliegenden Platten (3, 4, 5, 6,7) nach oben geradlinig abhebbar ist.

**Claims**

1. Switching scanning unit (1) for measuring machines and use in processing machines for measuring tasks, consisting essentially of a probe (2) installed centrally in the Z-axis and able to be displaced in the three coordinate directions X, Y, Z, characterised in that the scanning unit (1) comprises a set of five plates, discs or the like (3, 4, 5, 6, 7) lying one above the other in parallel with the probe (2) arranged centrally with respect to their surfaces, which probe is mounted to tilt about tilting axes (12, 13, 14, 15) of the plates (3, 4, 5, 6, 7) for displacement in the coordinate directions X and Y, in which case each of the tilting axes (12, 13, 14, 15) is at the same distance from the central probe (2) and is located on a common plane of cross section at right angles to the probe (2) and that selectively the second (4) or the third (5) or the fourth plate (6) is connected both to the plate (3, 4, 5) located respectively thereabove as well as to the plate (5, 6, 7) located respectively therebelow by joints (16, 17, 21, 23) arranged parallel to the coordinate axes X and Y on the side edges (8, 9, 10, 11) of the plates (3, 4, 5, 6, 7) so that when the probe (2) is displaced in the coordinate directions X and Y, the flow of force passes from the first plate (3) by way of the joint (17) to the second plate (4), from the second plate (4) by way of the joint (16) located opposite at an angle of 180° to the third plate (5), from the third plate (5) by way of the joint (21) staggered by an angle of 90° with respect to the second plate (4) to the fourth plate (6) and from the fourth plate (6) by way of the joint (23) located opposite at an angle of 180° to the fifth plate (7), whereas the displacement in the coordinate direction Z takes place in each case against the action of a spring (27, 28) in a straight line in the longitudinal axis of the probe (2).

2. Switching scanning unit according to Claim 1, characterised in that the joints (17, 16, 21, 23) are formed by leaf springs (19, 20, 22, 24) attached to two plates (3, 4; 4, 5; 5, 6; 6, 7) lying one above the other.

3. Switching scanning unit according to Claim 1, characterised in that the joints (17, 16, 21, 23) are formed by corresponding recesses located in two plates (3, 4; 4, 5; 5, 6; 6, 7) lying one above the other, which recesses extend parallel to the coordinate directions X and Y and receive balls or rollers as tilting members.

4. Switching scanning unit according to one of Claims 1 to 3, characterised in that for producing a definite displacement force in the coordinate directions X and Y, the superimposed plates are held in the inoperative position by four springs (26) arranged on the corners of the plates and which are subjected to tension.

5. Switching scanning unit according to Claim 1, characterised in that the probe (2) can be raised upwards in a straight line in the coordinate direction Z together with the set of superimposed plates (3, 4, 5, 6, 7).

**Revendications**

1. Tête de palpage à commande de commutation pour machines à mesurer et pour être utilisée dans des machines d'usinage dans le but d'effectuer des opérations de mesure, comprenant essentiellement un palpeur (2) monté centralement suivant l'axe des Z et pouvant être dévié suivant les directions X, Y et Z des trois axes de coordonnées, caractérisée en ce que la tête de palpage (1) comporte un empilage de cinq plaques, disques ou analogues (3, 4, 5, 6, 7) superposés parallèlement, avec le palpeur (2) placé centralement par rapport à leurs surfaces, pouvant, pour la déviation suivant les axes des X et des Y, basculer autour d'axes de basculement (12, 13, 14, 15) des plaques (3, 4, 5, 6, 7), chacun des axes de basculement (12, 13, 14, 15) étant à la même distance du palpeur central (2) et placé sur un plan médian commun perpendiculairement au palpeur (2), et en ce que la seconde plaque (4), la troisième plaque (5) ou la quatrième plaque (6) selon le cas, est reliée à la fois à la plaque (3, 4, 5) située respectivement au-dessus et à la plaque (5, 6, 7) située respectivement au-dessous par des articulations (16, 17, 21, 23) disposées parallèlement aux axes des X et des Y sur les côtés (8, 9, 10, 11) des plaques (3, 4, 5, 6, 7), de telle façon que le flux de forces passe, lors de la déviation du palpeur (2) dans les directions des axes X et Y, de la première plaque (3) à la seconde plaque (4), par l'intermédiaire de l'articulation (17), de la seconde plaque (4) à la troisième plaque (5) par l'intermédiaire de l'articulation (16) opposée à 180°, de la troisième plaque (5) à la quatrième plaque (6) par l'intermédiaire de l'articulation (21) décalée de 90° par rapport à la seconde plaque (4), et de la quatrième plaque (6) à la cinquième plaque (7) par l'intermédiaire de l'articulation (23) opposée à 180°, tandis que la déviation suivant la direction de l'axe des Z a lieu en ligne droite suivant l'axe longitudinal du palpeur (2) contre l'action d'un ressort (27, 28).

2. Tête de palpage selon la revendication 1, caractérisée ence que les articulations (17, 16, 21, 23) sont constituées par des ressorts à lames (19, 20, 22, 24) fixés à deux plaques superposées (3, 4; 4, 5; 5, 6,; 6, 7).

3. Tête de palpage selon la revendication 1, caractérisée ence que les articulations (17, 16, 21, 23) sont formées par deux creux correspondants situés chacun dans l'une de deux plaques superposées (3, 4; 4, 5; 5, 6,; 6, 7), qui sont dirigés parallèlement aux directions des axes des X et des Y et reçoivent, comme éléments de basculement, des billes ou des rouleaux.

4. Tête de palpage selon l'une des revendications 1 à 3, caractérisée en ce que, pour engendrer une force de déviation définie dans les directions des axes des X et des Y, les plaques superposées sont maintenues en position de repos par quatre ressorts (26) placés aux sommets des plaques et sollicités en traction.

5. Tête de palpage selon la revendication 1, caractérisée en ce que le palpeur (2) peut être soulevé en ligne droite vers le haut, également en même temps que l'empilage des plaques (3, 4, 5, 6, 7) superposées.

# FIG. 1

# FIG. 2

FIG. 3

IV

26

26

Y

18

29

Y

26

26

IV

FIG. 4

18

Z

29

3

4

8

5

19

9

17

20

16

8

6

9

2

# FIG. 5